(19) Europäisches Patentamt
European Patent Office
Office européen des brevets

(11) EP 2 239 284 A1

(12) # EUROPEAN PATENT APPLICATION
published in accordance with Art. 153(4) EPC

(43) Date of publication:
**13.10.2010 Bulletin 2010/41**

(21) Application number: **09705595.8**

(22) Date of filing: **23.01.2009**

(51) Int Cl.:
***C08F 214/18*** *(2006.01)* ***H01L 33/00*** *(2010.01)*

(86) International application number:
**PCT/JP2009/051124**

(87) International publication number:
**WO 2009/096342 (06.08.2009 Gazette 2009/32)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.01.2008 JP 2008016631**
**18.09.2008 JP 2008239342**

(71) Applicant: **Asahi Glass Company, Limited**
**Chiyoda-ku**
**Tokyo 100-8405 (JP)**

(72) Inventors:
- **SUGIYAMA, Norihide**
**Tokyo 100-8405 (JP)**
- **OHKURA, Masahiro**
**Tokyo 100-8405 (JP)**
- **MORIZAWA, Yoshitomi**
**Tokyo 100-8405 (JP)**

(74) Representative: **Müller-Boré & Partner**
**Patentanwälte**
**Grafinger Straße 2**
**81671 München (DE)**

(54) **CURABLE COMPOSITION, FLUORINE-CONTAINING CURED PRODUCT, OPTICAL MATERIAL USING THE CURED PRODUCT, AND LIGHT-EMITTING DEVICE**

(57) It is an object to provide a curable composition which has a high curing rate and is excellent in productivity, and from which a fluorinated cured product having excellent dimensional stability can be obtained by suppressing volume shrinkage by bubbling during the curing reaction, and a process for producing such a curable composition.

A curable composition comprising a polymerizable compound having a polymerizable double bond, wherein the mass ratio of a polymerizable compound (P) having a molecular weight of at least 1,000 is at least 90 mass% to all polymerizable compounds in the curable composition, and the polymerizable compound (P) contains a fluoropolymer (X) having a molecular weight of at least 1,000 having specific repeating units.

EP 2 239 284 A1

## Description

TECHNICAL FIELD

The present invention relates to a curable composition and a fluorinated cured product, their production processes, and an optical material and a light-emitting device using them.

BACKGROUND ART

In recent years, development of a light-emitting device such as white LED (light emitting diode) as a next generation high efficiency illumination light source is in progress. Such a light-emitting device is encapsulated with a light-transmitting encapsulating resin such as a silicone resin for protection. However, the heating value in a light-emitting device increases as the electric power to be charged increases, and deterioration of the light-transmitting encapsulating resin becomes problematic since the light-emitting device is subjected to high temperature. The deterioration of the light-transmitting encapsulating resin will decrease the light emitting output from the light-emitting device, and shorten the lifetime as a light source.

On the other hand, a method of employing a fluoropolymer for various applications as an adhesive or a coating agent has been disclosed (Patent Documents 1 and 2). This fluoropolymer has a fluorinated alicyclic structure in the main chain, and has a low refractive index and a low surface energy. Further, it is excellent in light-transmitting properties, light resistance (especially durability against short wavelength light), chemical resistance, etc., and is soluble in a specific solvent. Accordingly, an adhesive or a coating agent employing this fluoropolymer can form a coating film having the above characteristics.

Accordingly, it is disclosed to utilized, as a light-transmitting encapsulating resin to encapsulate white LED, a coating film formed by a coating agent comprising the above fluoropolymer and a fluorinated solvent (Patent Document 3).

However, the coating agent disclosed in Patent Document 3 has such a problem that since the concentration of the fluoropolymer contained is at most about 25 mass%, it is difficult to obtain a thickness (100 μm or more) required to encapsulate the LED. To obtain a thickness sufficient for encapsulating, a method of recoating with the coating agent may be mentioned, but by this method, uniform encapsulating is difficult due to crackings formed in the coating film by recoating or due to bubbles caused by volatilization of the solvent.

Further, an amorphous fluoropolymer is also excellent in transparency, light resistance (especially durability against short wavelength light), chemical resistance, etc. and is highly durable. Accordingly, it is useful for formation of a light-transmitting encapsulating resin which will replace the silicone resin. For example, Patent Document 4 discloses encapsulation of an LED in a light-transmitting manner utilizing a liquid curable composition comprising a fluoropolymer and a fluoromonomer.

However, the fluoropolymer in the curable composition disclosed in Patent Document 4 has a special structure and comprises many components, and accordingly, the production process to obtain a fluorinated cured product is long, and the productivity was low. Further, depending on the conditions in the curing reaction, the volume shrinkage occurs by volatilization of unreacted fluoromonomer components contained in the curable composition and accordingly, the dimensional stability of a fluorinated cured product to be obtained is decreased in some cases. Volatilization of unreacted fluoromonomer components is unfavorable also in view of the environment. Accordingly, the temperature at the time of the curing reaction cannot be set high, and thus the curing rate of the curable composition was low.

Therefore, a curable composition is desired, which has a high curing rate, and with which a decrease in the dimensional stability of a fluorinated cured product to be obtained, by volatilization of low molecular weight components including unreacted fluoromonomers, is suppressed.

Patent Document 1: JP-A-2-84456
Patent Document 2: JP-A-2-129254
Patent Document 3: JP-A-2003-8073
Patent Document 4: WO07/145181

DISCLOSURE OF THE INVENTION

OBJECTS TO BE ACCOMPLISHED BY THE INVENTION

Accordingly, it is an object of the present invention to provide a process for producing a curable composition which has a high curing rate and is excellent in the productivity, with which a fluorinated cured product having excellent dimensional stability can be obtained by suppressing the volume shrinkage due to volatilization of low molecular weight components including unreacted fluoromonomers during the curing reaction.

Further, it is an object of the present invention to provide a fluorinated cured product obtained from the curable composition, a process for producing the curable composition, an optical material comprising the fluorinated cured product, and a light-emitting device encapsulated in a light-transmitting manner with the fluorinated cured product.

MEANS TO ACCOMPLISH THE OBJECTS

The curable composition of the present invention is a curable composition comprising a polymerizable compound having a polymerizable double bond, wherein the mass ratio of a polymerizable compound (P) having a molecular weight of at least 1,000 is at least 90 mass% to all polymerizable compounds in the curable composition, and the polymerizable compound (P) contains the following fluoropolymer (X):

fluoropolymer (X): a copolymer having a molecular weight of at least 1,000 among fluoropolymers (X)' which are copolymers having repeating units derived from at least one fluoromonomer (a) selected from the group consisting of a fluoromonoene and a cyclic polymerizable fluorodiene, and repeating units derived from a fluorodiene (b) having an unsaturated side chain remaining.

Further, the curable composition of the present invention is preferably such that the mass average molecular weight of the fluoropolymer (X) is from 3,000 to 20,000.
Further, the curable composition of the present invention is preferably such that the fluoromonomer (a) is a perfluoromonomer, and the fluorodiene (b) is a perfluorodiene.
Further, the curable composition of the present invention is preferably such that the fluoromonomer (a) is tetrafluoroethylene.
Further, the curable composition of the present invention is preferably such that the fluorodiene (b) is a compound represented by $CF_2$=CFO-$Q^{F1}$-OCF=$CF_2$ (wherein $Q^{F1}$ is a bivalent perfluoroalkylene group which may have a side chain of a perfluoroalkyl group, which has from 3 to 8 carbon atoms, and which may have an etheric oxygen atom between carbon atoms).
Further, the process for producing a curable composition of the present invention is a process for producing the curable composition as defined in any one of the above, which comprises a step of preliminarily charging part of the fluoromonomer (a) and the fluorodiene (b) to be used for preparation of the fluoropolymers (X)' among the entire amount to be used, to a reactor to initiate the polymerization reaction, and successively adding the rest of the fluoromonomer (a) and the fluorodiene (b) during the progress of the polymerization reaction to conduct polymerization thereby to produce the fluoropolymers (X)'.
Further, the process for producing a fluorinated cured product of the present invention is a process which comprises a step of curing the curable composition as defined in any one of the above at from 100 to 250°C.
Further, the process for producing a fluorinated cured product of the present invention is a process which comprises a step of curing the curable composition as defined in any one of the above with ultraviolet rays having a wavelength of from 150 to 400 nm.
Further, the present invention provides a fluorinated cured product, which is obtained by curing the curable composition as defined in any one of the above.
Further, the present invention provides an optical material, which comprises the above fluorinated cured product.
Still further, the present invention provides a light-emitting device, which is encapsulated in a light-transmitting manner with the above fluorinated cured product.

EFFECTS OF THE INVENTION

The curable composition of the present invention has a high curing rate and is excellent in the productivity. Further, the volume shrinkage by volatilization of low molecular weight components including unreacted fluoromonomers during the curing reaction can be suppressed, and accordingly, a fluorinated cured product to be obtained has excellent dimensional stability.
Further, according to the production process of the present invention, a fluorinated cured product having excellent dimensional stability can be obtained with high productivity.
Still further, according to the present invention, a fluorinated cured product obtained from the curable composition, an optical material comprising the fluorinated cured product, and a light-emitting device encapsulated in a light-transmitting manner with the fluorinated cured product, can be provided.

BEST MODE FOR CARRYING OUT THE INVENTION

<Curable composition>

The curable composition of the present invention comprises a polymerizable compound having a polymerizable double bond (carbon-carbon double bond), and the mass ratio of a polymerizable compound (P) having a molecular weight of at least 1,000 is at least 90 mass% to all polymerizable compounds. The mass ratio of the polymerizable compound (P) is preferably at least 95 mass%, more preferably at least 98 mass%, particularly preferably at least 99 mass%.
A polymerizable compound having a molecular weight of less than 1,000 mainly comprises an unreacted monomer remaining in preparation of the polymerizable compound (P) or an oligomer which has been insufficiently polymerized (hereinafter such a component will sometimes be referred to simply as a low molecular weight component).
Since the amount of the polymerizable compound having a molecular weight of less than 1,000 in the curable composition is small, volatilization of low molecular weight components at the time of the curing reaction can be suppressed, whereby a fluorinated cured product excellent in the dimensional stability can be obtained with a high productivity.

[Polymerizable compound (P)]

The polymerizable compound (P) contains at least a fluoropolymer (X) having polymerizable double bonds and having a molecular weight of at least 1,000.

(Fluoropolymer (X))

The fluoropolymer (X) is a copolymer having a molecular weight of at least 1,000 among fluoropolymers (X)' which are thermosetting copolymers having repeating unites derived from a fluoromonomer (a) and repeating units derived from fluorodiene (b) having an unsaturated side chain remaining (hereinafter simply referred to as a fluorodiene (b)). That is, it is one having a molecular weight of at least 1,000 among fluoropolymers (X)' obtained by copolymerizing a fluoromonomer (a) and a fluorodiene (b).
The fluoromonomer (a) is at least one member selected from the group consisting of a fluoromonoene and a cyclic polymerizable fluorodiene. The fluoromonomer (a) is preferably a perfluoromonomer in view of thermal stability.
The fluoromonoene as the fluoromonomer (a) is a fluorinated compound having one polymerizable double in its molecule.
The fluoromonoene may, for example, be a fluoroethylene such as tetrafluoroethylene, trifluoroethylene, chlorotrifluoroethylene or vinylidene fluoride, hexafluoropropylene, perfluoroalkoxyethylene, or a compound represented by the following formula (a-1) or (a-2):

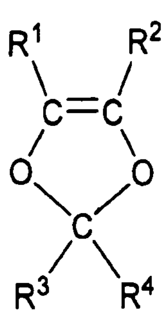

(a-1)

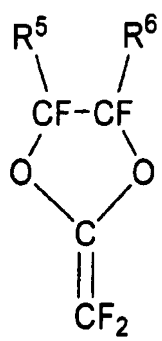

(a-2)

wherein each of $R^1$ and $R^2$ which are independent of each other, is a fluorine atom or a $OCF_3$ group, each of $R^3$ and $R^4$ which are independent of each other, is a fluorine atom or a $CF_3$ group, and each of $R^5$ and $R^6$ which are independent of each other, is a fluorine atom, a perfluoroalkyl group, a perfluoroalkoxy group or a perfluoroalkoxyalkyl group.
The cyclic polymerizable fluorodiene as the fluoromonomer (a) is a fluorinated compound having two polymerizable double bonds in its molecule, and is a fluorinated compound in which no polymerizable double bond remains

after the polymerization since both the two polymerizable double bonds contribute to the cyclic polymerization reaction.

The cyclic polymerizable fluorodiene may, for example, be $CF_2$=$CFOCX^1X^2CX^3X^4CF$=$CF_2$, wherein each of $X^1$ and $X^2$ which are independent of each other, is a fluorine atom, a $CF_3$ group, a chlorine atom or a hydrogen atom, and each of $X^3$ and $X^4$ which are independent of each other, is a fluorine atom, a $CF_3$ group or a hydrogen atom.

By use of the fluoromonomer (a), the thermal stability of the curable composition is high, and accordingly, the temperature at the time of the curing reaction can be set high. Accordingly, the fluidity of the curable composition at the time of molding can be increased even if no polymerizable compound having a molecular weight of less than 1,000 nor solvent is used. Further, the curing rate can be increased. Further, by use of the fluoromonomer (a), mechanical strength of the fluorinated cured product to be obtained can be improved.

The fluoromonoene is preferably a perfluoromonomer, more preferably tetrafluoroethylene. Particularly when tetrafluoroethylene is used as the fluoromonomer (a), the fluoropolymers (X) and (X)' are most excellent in the thermal stability and the fluidity.

The fluorodiene (b) is a compound having two carbon-carbon double bonds, in which at least part of the carbon-carbon double bonds does not contribute to the polymerization reaction and remains as the double bond after the polymerization. That is, two carbon atoms in one of the carbon-carbon double bonds of the fluorodiene (b) form the main chain after the polymerization. At least part of the other carbon-carbon double bond does not contribute to the polymerization reaction and forms an unsaturated side chain having a carbon-carbon double bond in the fluoropolymer (X). By use of the fluorodiene (b), unsaturated side chains remain in the fluoropolymer (X), and accordingly a fluorinated cured product can be obtained by the curing reaction utilizing the unsaturated side chains.

The fluorodiene (b) may be a perfluorodiene consisting of carbon atoms and fluorine atoms alone or consisting of carbon atoms, fluorine atoms and oxygen atoms alone. Further, a fluorodiene having one or two fluorine atoms in the above perfluorodiene substituted by a hydrogen atom may be mentioned. The fluorodiene (b) is preferably a perfluorodiene in view of the thermal stability.

The fluorodiene (b) preferably has from 5 to 10, more preferably from 5 to 8 carbon atom in the connecting chain connecting the two carbon-carbon double bonds.

When the number of carbon atoms in the connecting chain is at least 5, intramolecular cyclization by reaction of the two carbon-carbon double bonds at the time of the polymerization reaction can be suppressed, whereby unsaturated side chains having a carbon-carbon double bond are likely to remain in the fluoropolymer (X). Further, when the number of carbon atoms in the connecting chain is at most 10, it is likely to prevent the fluoropolymer (X) from having a high molecular weight or being gelated due to the crosslinking reaction by the carbon-carbon double bonds remaining in the side chains of each fluoropolymer (X) before the curing. Accordingly, it will be easy to prevent the fluidity before curing the curable composition from being remarkably decreased. Further, it is difficult to synthesize a fluorodiene (b) having a too long connecting chain and to purify it to have a high purity.

The fluorodiene (b) may be a fluoro cyclic diene having an alicyclic structure in its molecule or may be a fluoro acyclic diene having no alicyclic structure. Among them, the fluorodiene (b) is preferably a fluoro acyclic diene having no alicyclic structure, since it has a high effect to impart flexibility to a fluorinated cured product to be obtained by curing the curable composition, and the fluidity will not be decreased too much.

Further, the fluoro acyclic diene is a compound having no alicyclic structure as mentioned above. Further, the connecting chain connecting the two carbon-carbon double bonds is preferably a linear structure having no cyclic structure with a view to preventing the fluidity from being decreased too much.

The fluoro acyclic diene is preferably a compound represented by the following formula.

$$CF_2{=}CFO\text{-}Q^{F1}\text{-}OCF{=}CF_2$$

$$CF_2{=}CFOCH_2\text{-}Q^{F2}\text{-}CH_2OCF{=}CF_2$$

$$CH_2{=}CFCF_2O\text{-}Q^{F3}\text{-}OCF_2CF{=}CH_2$$

wherein each of $Q^{F1}$ and $Q^{F3}$ which are independent of each other, is a bivalent perfluoroalkylene group which may have a side chain of a perfluoroalkyl group, which has from 3 to 8 carbon atoms, preferably from 3 to 6 carbon atoms, and which may have an etheric oxygen atom between carbon atoms, and $Q^{F2}$ is a bivalent perfluoroalkylene group which may have a side chain of a perfluoroalkyl group, which has from 2 to 6, preferably from 2 to 4 carbon atoms, and which may have an etheric oxygen atom between carbon atoms.

The fluorodiene (b) is more preferably a compound represented by $CF_2{=}CFO\text{-}Q^{F1}\text{-}OCF{=}CF_2$.

As specific examples of the fluoro acyclic diene, compounds represented by the following formulae may be mentioned.

$$CF_2{=}CFO(CF_2)_4OCF{=}CF_2$$

$CF_2=CFO(CF_2)_5OCF=CF_2$

$CF_2=CFO(CF_2)_6OCF=CF_2$

$CF_2=CFO(CF_2)_4OCF(CF_3)CF_2OCF=CF_2$

$CF_2=CFOCH_2(CF_2)_2CH_2OCF=CF_2$

$CF_2=CFOCH_2(CF_2)_4CH_2OCF=CF_2$

$CH_2=CFCF_2O_CF(CF_3)CF_2OCF=CF_2$

$CH_2=CFCF_2OCF(CF_3)CF_2OCF(CF_3)CF_2OCF=CF_2$

Such fluorodienes (b) may be used alone or two or more may be used in combination.

The fluoro cyclic diene is a compound having one or two alicyclic structures. The alicyclic structure in the fluoro cyclic diene consists of carbon atoms alone or carbon atoms and oxygen atoms alone. The number of carbon atoms constituting the alicyclic structure is preferably from 4 to 8, more preferably 5 or 6. A particularly preferred alicyclic structure is a 5-membered ring or a 6-membered ring having one or two oxygen atoms.

In a case where the fluoro cyclic diene has two alicyclic structures, such alicyclic structures may be connected by a single bond or a bivalent or higher valent connecting group, or may be condensed (including a case where one carbon atom is shared). The connecting group may, for example, be an oxygen atom, a perfluoroalkylene group (preferably having at most 8 carbon atoms), or a perfluoroalkylene group (preferably having at most 8 carbon atoms) having an etheric oxygen atom at one or both terminals or between carbon atoms.

To the carbon atom constituting the alicyclic structure, a substituent other than a fluorine atom may be bonded. The substituent may, for example, be preferably a perfluoroalkyl group having at most 15 carbon atoms, a perfluoroalkyl group having at most 15 carbon atoms and having at least one etheric oxygen atom between carbon atoms, a perfluoroalkoxy group having at most 15 carbon atoms, or a perfluoroalkoxy group having at most 15 carbon atoms and having at least one etheric oxygen atom between carbon atoms.

One or both carbon atoms in at least one of the two carbon-carbon double bonds of the fluoro cyclic diene, are a carbon atom constituting the alicyclic structure. That is, in the fluoro cyclic diene, a carbon-carbon double bond is formed by adjacent carbon atoms constituting the alicyclic structure, or a carbon-carbon double bond is formed by one carbon atom constituting the alicyclic structure and a carbon atom bonded to the carbon atom. In a case where the fluoro cyclic diene has two alicyclic structures, each alicyclic structure has one of the two carbon-carbon double bonds.

The number of all carbon atoms in the fluoro cyclic diene is preferably from 8 to 24, more preferably from 10 to 18 in view of its boiling point and the heat resistance of a fluorinated cured product to be obtained.

Further, the fluoro cyclic diene is preferably a compound having two alicyclic structures, each of the two alicyclic rings having a carbon-carbon double bond, more preferably a compound having two perfluoro(2-methylene-1,3-dioxolane) structures. Further, it is more preferably a compound having two perfluoro(2-methylene-1,3-dioxolane) structures connected by a single bond or a bivalent connecting group with their 4-positions as connecting positions (hereinafter referred to as a compound (b-1)), represented by the following formula (b-1), or a compound having two perfluoro(2-methylene-1,3-dioxolane) structures connected by single bonds or bivalent connecting groups with their 4- and 5-positions as connecting positions, represented by the following formula (b-2), and it is particularly preferably the compound (b-1).

Further, as another fluoro cyclic diene, a compound represented by the following formula (b-3) may be mentioned.

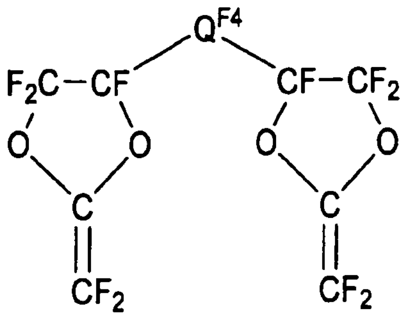

(b-1)

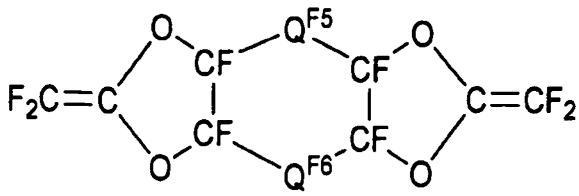

(b-2)

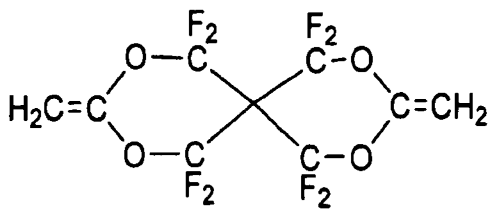

(b-3)

wherein $Q^{F4}$ is a single bond, an oxygen atom, or a perfluoroalkylene group having from 1 to 10 carbon atoms, which may have an etheric oxygen atom, and each of $Q^{F5}$ and $Q^{F6}$ which are independent of each other, is a single bond, an oxygen atom, or a perfluoroalkylene group having from 1 to 5 carbon atoms, which may have an etheric oxygen atom.

The carbon-carbon double bonds remaining in the side chains in the repeating unites derived from the compound (b-1) is highly radical polymerizable. Accordingly, they are sufficiently reacted at the time of the curing reaction of the curable composition, and remaining of side chains having a carbon-carbon double bond in a fluorinated cured product to be obtained can be suppressed, whereby the thermal stability of the fluorinated cured product will be improved.

As specific examples of the compound (b-1), compounds represented by the following formulae may be mentioned. The compound (b-1) is preferably prepared by a method disclosed in WO2005/085303.

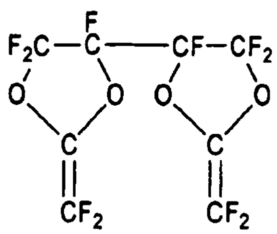

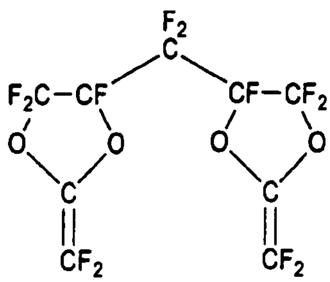

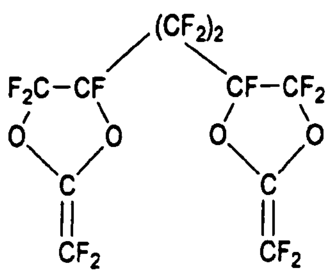

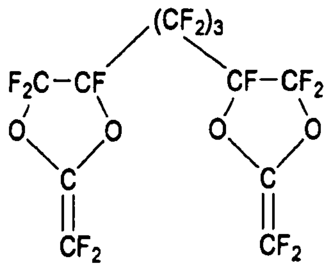
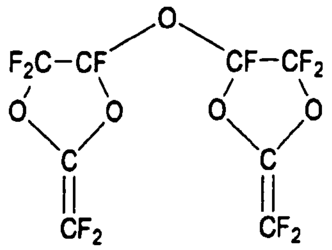
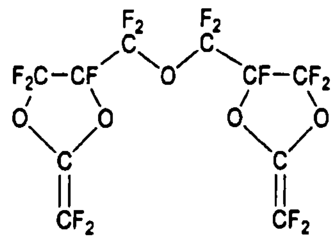

As described above, by copolymerizing the fluoromonomer (a) and the fluorodiene (b), a fluoropolymer (X) which is a copolymer in which unsaturated side chains having a carbon-carbon double bond remain in at least part of repeating units derived from the fluorodiene (b), is obtained.

For example, when $CF_2$=CF-O-$(CF_2)_4$-O-CF=$CF_2$ is used as the fluorodiene (b), the fluoropolymer (X) has at least repeating units represented by the following formula.

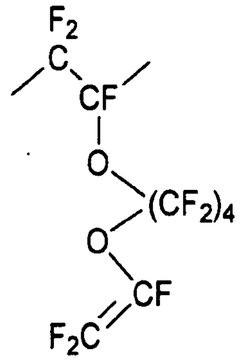

The mass ratio of the fluoropolymer (X) in the fluoropolymers (X)' is at least 90 mass%, preferably at least 95 mass%, more preferably at least 98 mass%, particularly preferably at least 99 mass%.

By the fluoropolymer (X) containing no polymerizable compound having a molecular weight of less than 1,000, volatilization of low molecular weight components at the time of the curing reaction can be suppressed even when it is used as the curable composition as it is, whereby a fluorinated cured product excellent in the dimensional stability can be obtained with high productivity.

The fluoropolymer (X)' can be obtained by copolymerizing the fluoromonomer (a) and the fluorodiene (b). The polymerization method of copolymerizing the fluoromonomer (a) and the fluorodiene (b) is not particularly limited, and a known polymerization method such as suspension polymerization, solution polymerization, emulsion polymerization or bulk polymerization may be employed. The solution polymerization is particularly preferred, since polymerization is possible in a state diluted with a solvent, and the crosslinking reaction between molecules by the carbon-carbon double bonds remaining in the side chains can be suppressed.

The medium for polymerization in the solution polymerization is preferably a fluorinated solvent in which the fluoropolymers (X)' to be formed are soluble. The fluorinated solvent may, for example, be dichloropentafluoropropane (HCFC-225), $CF_3CH_2CF_2H$ (HFC-245fa), $CF_3CF_2CH_2CF_2H$ (HFC-365mfc), perfluorohexane, perfluorooctane, perfluoro (2-butyltetrahydrofuran), perfluoro(tributylamine), $CF_3CF_2CF_2CF_2CF_2CF_2H$, $CF_3CH_2OCF_2CF_2H$, $CF_3CH_2OCH_2CF_3$ or $CF_3CF_2OCF_2CF_2OCF_2CF_3$.

Further, in production of the fluoropolymers (X)', it is particularly preferred to conduct a step of preliminarily charging part of the fluoromonomer (a) and the fluorodiene (b) to be used for preparation of the fluoropolymers (X)' among the entire amount to be used, to a reactor to initiate the polymerization reaction, and successively adding the rest of the fluoromonomer (a) and the fluorodiene (b) during the progress of the polymerization reaction to conduct polymerization, not to react the entire amount of the fluoromonomer (a) and the fluorodiene (b) all at once. By the above process, the molecular weight distribution and the composition distribution of the fluoropolymers (X)' and the fluoropolymer (X) to be obtained can be made narrow, it will be easy to bring the content of low molecular weight components having a molecular weight of less than 1,000 among the fluoropolymers (X)' to be less than 10 mass%, and the yield of the

fluoropolymer (X) will be improved. Further, the fluoropolymers (X)' include components having a particularly low fluorodiene (b) content and substantially not being a polymerizable compound in addition to low molecular weight components as polymerizable compounds, and it will be easy to reduce such compounds by the above step.

A step after the fluoropolymers (X)' are obtained, a step of mixing the after-mentioned polymerizable compound (Y), additives, etc. may, for example, be mentioned.

In production of the fluoropolymer (X)', the molar ratio of the fluoromonomer (a) to the fluorodiene (b) is preferably from 60:40 to 95:5. Further, in a case where fluoroethylene is used as the fluoromonomer (a), the molar ratio of fluoroethylene to fluorodiene is more preferably from 60:40 to 95:5, particularly preferably from 70:30 to 90:10. If the proportion of the fluoromonomer (a) charged is too large, the molecular weight of the fluoropolymers (X)' will be too high, and the fluidity will be decreased. Further, the transparency of a fluorinated cured product to be obtained tends to be low.

As a polymerization initiator to be used in the polymerization reaction, it is possible to use most of organic peroxides having a 10 hour half-life temperature being from 20 to 120°C, and it is preferred to use a fluorinated peroxide such as fluorinated diacyl peroxide so as to prevent a decrease in the reaction rate by a reaction to withdraw hydrogen atoms in the polymerization initiator.

The concentration of the polymerization initiator in the reaction solution is preferably from 0.1 to 5 mass%, more preferably from 0.5 to 2 mass%.

Further, the polymerization temperature varies depending on the 10 hour half-life temperature of the initiator and the polymerization rate of the monomers, and is preferably from 20 to 120°C, more preferably from 40 to 90°C.

In the polymerization reaction, it is preferred to use a chain transfer agent.

The chain transfer agent may, for example, be a chlorine compound such as $CCl_4$, $CH_3Cl$, $SO_2Cl_2$ or $CHFCl_2$, or a hydrocarbon compound such as methanol, ethanol, isopropanol, hexane or diethyl ether. Particularly, $SO_2Cl_2$ is preferred since the chain transfer efficiency is high, and the fluoropolymer (X) can be obtained in high yield.

The amount of the chain transfer agent to be used varies depending on the chain transfer constant, but when $SO_2Cl_2$ is used, the amount is preferably from 0.001 to 0.1, more preferably from 0.001 to 0.05 by the molar ratio based on the total amount of the mixture of the fluoromonomer (a) and the fluorodiene (b). When the molar ratio is at least 0.001, it will be easy to prevent the molecular weight of the polymer from being too high. Further, when the molar ratio is at most 0.1, it will be easy to prevent the molecular weight of the fluoropolymers (X)' from being decreased too much.

The fluoropolymer (X) in the present invention can be easily obtained by removing low molecular weight components having a molecular weight of less than 1,000 from the above obtained fluoropolymers (X)'. A method of removing the low molecular weight components having a molecular weight of less than 1,000 may, for example, be a method of heating the fluoropolymers (X)' under reduced pressure for removing, a method of extracting low molecular weight components from the fluoropolymers (X)' by supercritical carbon dioxide, a method of charging a solution of the fluoropolymers (X)' in a poor solvent to sediment the fluoropolymer (X), and removing the low molecular weight components which are not sedimented, or a method of fractionating and removing the low molecular weight components by means of gel permeation chromatography. A preferred method of removing the low molecular weight components is a method of heating the fluoropolymers (X)' under reduced pressure for removing.

As conditions for removing components having a molecular weight of less than 1,000 by heating under reduced pressure, the pressure is preferably from 1 to 100 hPa, more preferably from 1 to 20 hPa, most preferably from 1 to 10 hPa. The temperature is preferably from 100 to 150°C, more preferably from 120 to 150°C. The lower the pressure (the higher the degree of vacuum), the better, but it is commonly not easy to reduce the pressure as the apparatus size increases. If the temperature is too low, it may take a long period of time to remove the low molecular weight components, or they cannot be removed in some cases. Further, if the temperature is too high, partial gelation reaction may occur during heating in some cases, such being unfavorable.

A more preferred embodiment may be a method of reducing the content of low molecular weight substances contained in the fluoropolymers (X)' by means of a method of heating under reduced pressure, and then removing low molecular weight substances by using an extraction solvent in a supercritical state to obtain the fluoropolymer (X).

After the fluoropolymers (X)' are brought into contact with an extraction solvent in a supercritical state, the fluoropolymer (X) is separated from the extraction solvent, thereby to reduce the amount of the low molecular weight substances contained in the fluoropolymers (X)'.

The extraction solvent in the above extraction is a solvent in which the low molecular weight substances are dissolved, so that the low molecular weight substances and the fluoropolymer (X) can be separated.

The extraction solvent is not particularly limited so long as the above-described low molecular weight substances can be extracted at a temperature of the critical temperature of the extraction solvent to be used or higher and less than 130°C under a pressure of the critical pressure of the extraction solvent or higher. For example, carbon dioxide, or a fluorocarbon having from 1 to 3 carbon atoms such as fluoroform ($CF_3H$; R23) or perfluoroethane ($C_2F_6$; R116) may, for example, be mentioned. Among them, carbon dioxide, fluoroform or perfluoroethane is preferred, which is easily in a supercritical state, and is excellent in the extraction efficiency, and carbon dioxide is more preferred.

The extraction solvents may be used alone or as a mixture of two or more, but by use of only one of carbon

dioxide, fluoroform and perfluoroethane, the fluoropolymer (X) can be sufficiently purified.

The temperature of the extraction solvent in the extraction is a temperature of the critical temperature of the extraction solvent or higher and less than 130°C, and the pressure is the critical pressure of the extraction solvent or higher. That is, the above extraction is carried out by making the extraction solvent to be used be a supercritical fluid at a temperature less than 130°C and bringing it into contact with the fluoropolymers (X)'.

The above temperature may optionally be set in accordance with the extraction solvent to be used within the above range, and a preferred lower limit is a temperature higher than the critical temperature by 0.1 °C, and a preferred upper limit is 100°C, more preferably 80°C.

The above pressure may optionally be set in accordance with the extraction solvent to be used within the above range, and a preferred lower limit is a pressure higher than the critical pressure by 10,000 Pa and a preferred upper limit is a pressure higher than the critical pressure by 70 MPa.

In the above described purification method, by increasing the density of the extraction solvent such as carbon dioxide or fluoroform, the extraction efficiency of the low molecular weight substances can be improved. As the mechanism, an increase of the solubility of the low molecular weight substances in the extraction solvent by the increase of the density of the extraction solvent, is considered.

The density of the extraction solvent such as carbon dioxide or fluoroform is preferably at least 0.2 g/$cm^3$ and at most 1.3 g/$cm^3$ at the site of the extraction, i.e. under conditions where the extraction solvent is at the above described temperature under the above described pressure.

Further, as an auxiliary solvent, a halogenated hydrocarbon solvent or a hydrocarbon solvent (hereinafter referred to as an entrainer) may be used in combination with the extraction solvent in a supercritical state. The entrainers may be used alone or as a mixture. As specific examples of the fluorinated solvent to be used, the following compounds may be mentioned.

For example, $CF_3CF_2CHCl_2$, $CF_2ClCF_2CHClF$, $CF_3CF_2CHCl_2$, CFCl2CF2Cl, $CCl_4$, $CF_3CHFCHFCF_2CF_3$ or $CF_3CH_2OCF_2CF_2H$.

As the hydrocarbon solvent to be used, methanol, ethanol, propanol, isopropanol or dimethyl ether may, for example, be mentioned.

The above purification method is to carry out extraction by using an extraction solvent in a supercritical state, and accordingly the low molecular weight substances can efficiently be reduced, and the fluoropolymer (X) to be obtained has a narrow molecular weight distribution.

The above described purification method is to reduce the low molecular weight substances, and accordingly, the fluoropolymer (X) to be obtained has a narrower molecular weight distribution represented by Mw/Mn which is the ratio of the mass average molecular weight Mw to the number average molecular weight Mn measured by GPC.

The fluoropolymers (X)' and the fluoropolymer (X) preferably have a mass average molecular weight of from 3,000 to 20,000, more preferably from 5,000 to 15,000. The mass average molecular weights of the fluoropolymers (X) ' and the fluoropolymer (X) can be obtained as the molecular weight as calculated as PMMA (polymethyl methacrylate) by means of gel permeation chromatography (GPC).

When the mass average molecular weight of the fluoropolymer (X) is at least 3,000, volatilization of the low molecular weight components during the curing reaction of the curable composition tends to be prevented. Further, when the mass average molecular weight of the fluoropolymer (X) is at most 20,000, fluidity at the minimum temperature at which the curing reaction takes place at the time of molding, or below, can be secured. If the molecular weight is too high and the fluidity is poor, molding into a desired shape cannot be carried out, or the fluidity tends to be non-uniform and accordingly there may be a deviation in characteristics of a molded product.

Further, when the mass average molecular weight of the fluoropolymer (X) is set high within the above range, a fluorinated cured product having a higher thermal stability is likely to be obtained.

Further, the content of carbon-carbon double bonds remaining in the side chains in molecules of each of the fluoropolymers (X)' and the fluoropolymer (X) is preferably from 0.1 to 2 mmol/g, more preferably from 0.5 to 1.0 mmol/g. The content of the carbon-carbon double bond can be calculated by measurement by $F^{19}$-NMR.

When the content of the carbon-carbon double bonds is at least 0.1 mmol/g, it will be easy to prevent a decrease in the hardness by insufficient crosslinking of a fluorinated cured product to be obtained by curing the curable composition, or to prevent a tacky surface of the curable composition. Further, when the content of the carbon-carbon double bonds is at most 2 mmol/g, it will be easy to prevent a too much decrease in the solubility in a solvent at the time of the polymerization reaction or in the solubility in a case of using a solvent at the time of the curing reaction, due to gelation by the crosslinking reaction between the fluoropolymer (X) molecules or by the polymer having a high molecular weight. Further, it will be easy to prevent a decrease in the thermal stability by remaining of unreacted carbon-carbon double bonds in the fluorinated cured product to be obtained.

The fluoropolymer (X) has a high molecular weight and accordingly is a highly viscous liquid at room temperature, but when heated, its viscosity will be decreased, and it will have fluidity. The fluoropolymer (X) preferably has a viscosity of from 1 to 100 Pa·s at from 50 to 100°C.

Further, the fluoropolymer (X) will not substantially be cured at 100°C or below, and it is heat-cured at from 100 to 200°C, preferably from 150 to 200°C.

The content of the fluoropolymer (X) in the polymerizable compound (P) (100 mass%) is preferably from 60 to 100 mass%, more preferably from 80 to 100 mass%, particularly preferably from 90 to 100 mass%.

When the content of the fluoropolymer (X) is at least 60 mass%, a curable composition having a high curing rate is likely to be obtained, and a fluorinated cured product excellent in the dimensional stability is likely to be obtained.

(Other polymerizable compound (Y))

The polymerizable compound (P) may contain other polymerizable compound (Y) in addition to the fluoropolymer (X). The polymerizable compound (Y) is a monomer having a molecular weight of at least 1,000 by itself or may be one which is polymerized to have a molecular weight of at least 1,000.

The polymerizable compound (Y) is preferably a fluoropolymer or a fluorooligomer, more preferably a perfluoropolymer or a perfluorooligomer. A monomer constituting the perfluoropolymer or the perfluorooligomer may, for example, be $CF_2=CFO-Rf-OCF=CF_2$ or $CF_2=CFOCH_2-Rf-CH_2OCF=CF_2$.

In the formulae, Rf is a perfluoroalkylene group or a perfluorooxyalkylene group which may have a perfluoroalkyl group in its side chain.

As specific examples of Rf, for example, a perfluoropolyether having repeating units of e.g. $-CF_2-$, $-CF_2O-$, $-CF_2CF_2O-$, $-CF_2CF_2CF_2O-$ or $-CF(CF_3)CF_2O-$ may, for example, be mentioned.

Further, to the curable composition of the present invention, as the case requires, additives may be added in addition to the polymerizable compound.

Such additives may, for example, be a phosphor for an optical element, a dye, or a light diffusing agent such as silica or alumina fine particles. Further, as additives for application which requires heat resistance and chemical resistance other than an optical material, inorganic fillers, glass fibers, PTFE (polytetrafluoroethylene) particles, may, for example, be mentioned.

In a case where zirconia nanoparticles, titania nanoparticles or the like are used as the additives, it is possible to increase the refractive index by from about 0.05 to about 0.15 depending on the addition amount while the transparency is maintained.

<Fluorinated cured product>

The fluorinated cured product of the present invention is a cured product obtained by curing the curable composition.

The fluorinated cured product of the present invention has high light resistance (especially durability against short wavelength light having a wavelength of from 200 to 500 nm) and transparency and is excellent in heat resistance.

(Production process)

A process for producing the fluorinated cured product of the present invention is a process comprising a step of curing the curable composition at from 100 to 250°C.

The curing temperature is preferably from 125 to 220°C, more preferably from 150 to 200°C.

When the curing temperature is at least 100°C, a fluorinated cured product can be obtained in a short period of time, thus increasing the productivity. Further, when the curing temperature is at most 250°C, a fluorinated cured product excellent in the dimensional stability will easily be obtained.

The method of curing the curable composition is not particularly limited, and it may, for example, be a method of heating the curable composition at from 50 to 100°C to make it flow, which is applied and then cured, or a method of applying it by using a solvent, followed by curing, and the former is preferred.

The curing reaction may be carried out in a multi-stage manner such that the temperature increases stepwise. In a case where the curing reaction is carried out in a multi-stage manner, the curing temperature may be set so that at least the maximum temperature is within the above range.

Further, in the curing reaction of the curable composition, a curing agent such as a fluorinated organic peroxide may or may not be used. The curable composition of the present invention can be cured, even when no curing agent is used, by heating. The fluorinated organic peroxide may, for example, be $(C_6F_5C(CO)O)_2$ or $((CF_3)_3CO)_2$.

The mechanism of the crosslinking reaction in a case where no curing agent is used is not clearly understood, but oxygen dissolved in the fluoropolymer (X) becoming a radical source, part of the structure in the fluoropolymer (X) being pyrolytically decomposed to generate radicals, or thermal coupling reaction of side chains $-CF=CF_2$ groups in the fluoropolymer (X), etc. are considered as factors.

Further, the process for producing the fluorinated cured product of the present invention is preferably a process

comprising a step of curing the curable composition with ultraviolet rays having a wavelength of from 150 to 400 nm. In such a case, the curing reaction will proceed even at room temperature, and a cured product having hardness higher than that obtained by heat curing can be obtained.

The wavelength of the ultraviolet rays is preferably from 150 to 400 nm, more preferably from 193 to 365 nm, most preferably from 248 to 365 nm.

For 250 to 400 nm, a metal halide lamp is used, and for 254 nm, 313 nm and 365 nm, a high-pressure mercury lamp is used. Further, a KrF eximer laser is used for 248 nm, an ArF eximer laser for 193 nm, and a $F_2$ laser for 157 nm.

Particularly in a case of irradiation with short wavelength ultraviolet rays of 254 nm, no photoinitiator may be used, and a cured product can be prepared by adjusting the irradiation time in accordance with the ultraviolet irradiation intensity. Curing may be carried out by irradiation at an irradiation intensity within a range of from 0.1 to 500 $mW/cm^2$ for about 1 minute to about 10 hours.

Further, by use of a photoinitiator, curing is possible by irradiation with ultraviolet rays of from 300 to 400 nm.

Here, the mechanism why curing proceeds without use of a photoinitiator when short wavelength ultraviolet rays of 254 nm are used, is not clearly understood. According to structural analysis by $^{19}F$-NMR, absence of a cyclobutane ring to be caused by thermal coupling of $-CF=CF_2$ groups in the side chains of the fluoropolymer (X), in the cured product, was confirmed. Accordingly, it is suggested that polymerization of $-CF=CF_2$ groups in the fluoropolymer (X) proceeds. As an initiation source, it is considered that a terminal group having a carbonyl group such as COOH present at the terminal of the fluoropolymer (X) undergoes removal of $CO_2$ by ultraviolet rays, or -COF formed by reaction of $O_2$ present in a very small amount with a $-CF=CF_2$ group undergoes removal of COF by ultraviolet rays, thereby to generate radicals (J. Fluorine Chemistry, (1987) Vol. 36, 449).

The photoinitiator may, for example, be an acetophenone compound, a benzoin ether compound, a benzyl ketal compound, a ketone compound such as benzophenone or benzyl, an acylphosphine oxide compound, an O-acyloxime compound, a titanocene compound or a halomethyltriazine compound such as 2,4,6-tris(trichloromethyl)-1,3,5-triazine. Preferred is a fluorinated photoinitiator having some of hydrogen atoms substituted by fluorine or a fluoroalkyl group in view of compatibility with the fluoropolymer (X).

The amount of use of the photoinitiator is preferably from 0.01 to 10 mass%, more preferably from 0.1 to 1 mass%. When the amount of use of the photoinitiator is within the above range, a transparent cured product which is less colored is easily obtained without decreasing the curing rate.

Further, the process for producing the fluorinated cured product of the present invention is also preferably a process comprising a step of curing the curable composition with radiation of from 1 kGy to 500 kGy.

[Optical material and light-emitting device]

The fluorinated cured product of the present invention has high light resistance (especially durability against short wavelength light having a wavelength of from 200 to 500 nm) and transparency and is excellent in heat resistance, and is thereby useful as an optical material.

The optical material may be used for an application to a core material or clad material of optical fibers, a core material or clad material of an optical waveguide, a pellicle material, a surface protecting material for a display (e.g. PDP (plasma display panel), LCD (liquid crystal display), FED (field emission display) or an organic EL), a surface protecting material for a lens (e.g. a condensing lens for a light-emitting device, an artificial crystalline lens, a contact lens or a low refractive index lens), a material for a lens (e.g. a condensing lens for a light-emitting device, an artificial crystalline lens, a contact lens or a low refractive index lens), or a sealing material for a device (e.g. a light-emitting device, a solar cell device or a semiconductor device).

The optical material of the present invention is preferably used as a molded product made of a fluorinated cured product having an optional form (e.g. a plate-form, a tube form, a stick form, etc.) obtained by curing the curable composition in an optional form of mold, or as a coating film of the fluorinated cured product to encapsulate an optional substrate in a light-transmitting manner, which is formed by curing the curable composition or the like on an optional substrate (e.g. the above display, lens, device, etc.).

The molded product is preferably a core material or clad material of optical fibers, a core material or clad material of an optical waveguide, or a material for a lens.

The coating film is preferably a sealing material for a device, for example, a sealing material to encapsulate a semiconductor device, a solar cell device or a light-emitting device (e.g. LED, laser diode (LE), an electroluminescence device, etc.) in a light-transmitting manner, and from the viewpoint that the fluorinated cured product of the present invention has the above properties, it is particularly preferably a sealing material to encapsulate a short wavelength light-emitting device in a light-transmitting manner. As the short wavelength light-emitting device, white LED may be mentioned.

As described above, the present invention provides a light-emitting device encapsulated in a light-transmitting manner with the optical material. In a case where the light-emitting device of the present invention is a short wavelength light-emitting device having a wavelength of from 200 to 500 nm, it is possible to add e.g. a phosphor for changing a

light-emitting wavelength of LED to the curable composition, as the case requires.

As described above, the curable composition of the present invention has a high curing rate, from which a fluorinated cured product can be obtained in a short period of time, thus increasing the productivity. This is because the proportion of polymerizable compounds having a molecular weight less than 1,000 is low to all the polymerizable compounds in the curable composition, and volatilization of low molecular weight components unfavorable to the environment is small even when the temperature in the curing reaction is high, and accordingly the curing reaction can be carried out at high temperature.

Further, with the curable composition of the present invention, a decrease in the dimensional stability of a fluorinated cured product by volume shrinkage during the curing reaction can be suppressed. Accordingly, a precise molded product can be produced by using the fluorinated cured product of the present invention. This is considered to be because volatilization of low molecular weight components can be suppressed since the proportion of polymerizable compounds having a molecular weight of less than 1,000 is small to all the polymerizable compound in the curable composition.

Further, it is known that polymerizable double bonds in a fluoromonomer usually involve volume shrinkage when used for the polymerization reaction. It is considered that a small proportion of polymerizable compounds having a molecular weight of less than 1,000 to all the polymerizable compounds and a small proportion of polymerizable double bonds per unit volume in the curable composition of the present invention are also factors to suppress the volume shrinkage and to improve the dimensional stability of the fluorinated cured product.

Further, a curable composition disclosed in Patent Document 4 comprises a cyclic monoene so as to increase the hardness of a fluorinated cured product after cured. Accordingly, if a curable composition containing no such component is cured, the surface of a cured product is viscous, and one having sufficient hardness cannot be obtained.

However, in the present invention, since the fluoropolymer (X) is used, a crosslinked structure is formed when the curable composition is cured. Accordingly, a fluorinated cured product having sufficient hardness can be obtained without use of the above cyclic monoene. Particularly, when the curable composition is cured with ultraviolet rays of 254 nm, a crosslinked structure is formed effectively as compared with thermal curing, and a cured product having higher hardness and thermal stability can be obtained.

## EXAMPLES

Now, the present invention will be described in detail with reference to Examples and Comparative Example. However, it should be understood that the present invention is by no means restricted to the following Examples.

In Examples, the content of double bonds in each of the fluoropolymers (X) and (X)' was measured by $^{19}F$-NMR. Further, the mass average molecular weight is obtained as a molecular weight as calculated as PMMA (polymethyl methacrylate) by means of gel permeation chromatography (GPC) using as a solvent $CF_2ClCF_2CHClF$ (manufactured by Asahi Glass Company, Limited, tradename: AK225cb, hereinafter referred to as AK225cb).

A process for producing a fluoropolymer used in Examples will be described.

### PREPARATION EXAMPLE 1: Preparation of fluoropolymer (X1)

An autoclave made of stainless steel, having an internal capacity of 1 L, equipped with a stirrer, was deaerated, and then to this autoclave, tetrafluoroethylene (hereinafter referred to as TFE) (21 g) as a fluoromonomer (a), $CF_2=CFOC_4F_8OCF=CF_2$ (perfluorotetramethylene divinyl ether (hereinafter referred to as C4DVE)) (78 g) as a fluorodiene (b), AK225cb (1,050 g), $SO_2Cl_2$ (9.0 g) as a chain transfer agent, and perfluorocyclohexane carbonyl peroxide (12 g) as a polymerization initiator were injected, and the interior of the autoclave was heated to 50°C with stirring. Then, TFE (total charged amount: 51 g) and C4DVE (total charged amount: 129 g) were successively added while the pressure was maintained under 0.13 MPa to carry out the polymerization reaction for 4 hours.

Then, the autoclave was cooled, and the content was taken out and put in a glass beaker having an internal capacity of 2 L. To this glass beaker, 500 g of methanol was charged with stirring to precipitate a copolymer. The supernatant fluid was removed, and the precipitate was re-dissolved in AK225cb, and the solution was subjected to filtration through a membrane filter made of polytetrafluoroethylene (hereinafter referred to as PTFE) having a pore size of 1 $\mu$m to obtain a polymer solution. Then, the solvent of the obtained polymer solution was distilled off by means of an evaporator to obtain a fluoropolymer (X1)' (72 g) in the form of a colorless and transparent highly viscous liquid.

Then, by heating the fluoropolymer in a vacuum at 120°C for 2 hours, 70 g of a fluoropolymer (X1) was obtained. The mass average molecular weight of the fluoropolymer (X1) was measured by GPC, whereupon it was 12,000. Further, the fluoropolymer (X1) contained no polymerizable compound having a molecular weight of less than 1,000.

Measurement by GPC was carried out under the following conditions.

Measurement was carried out by using high performance GPC "HLC-8220" manufactured by Tosoh Corporation. As a solvent, hexafluoroisopropanol/ASAHIKLIN AK225G=1/99 (volume ratio) were made to flow through a column

(PLgel 5 μ MIXED-C manufactured by Varian, Inc.) at a flow rate of 1.0 mL/min. The pressure was 40 MPa and the temperature was 40°C. As a measurement sample, the fluoropolymer (X) was dissolved in ASAHIKLIN AK225G to prepare a 0.5 mass% solution, and the molecular weight was measured by 500ELSD detector manufactured by Alltech Associates, Inc.

Further, the composition and the double bond content of the fluoropolymer (X1) were measured by $^{19}$F-NMR and as a result, the molar ratio of repeating units based on TFE to the repeating units based on C4DVE in the fluoropolymer (X1) was 70/30, and the double bond content was 1.0 mmol/g.

PREPARATION EXAMPLE 2: Preparation of fluoropolymer (X2)

An autoclave made of stainless steel having an internal capacity of 1 L equipped with a stirrer was deaerated, and to this autoclave, perfluoropropyl vinyl ether (hereinafter referred to as PPVE) (112 g) as a fluoromonomer (a), TFE (20 g), C4DVE (28 g) as a fluorodiene (b), AK225cb (994 g), $SO_2Cl_2$ (4.5 g) as a chain transfer agent and perfluorocyclohexane carbonyl peroxide (12 g) as a polymerization initiator were injected, and the interior of the autoclave was heated to 50°C with stirring. Then, TFE (total charged amount: 48 g) and C4DVE (total charged amount: 43 g) were successively added while the pressure was maintained under 0.15 MPa to carry out the polymerization reaction for 4 hours.

Then, the autoclave was cooled, and the content was taken out and put in a glass beaker having an internal capacity of 2 L. To this glass beaker, 500 g of methanol was charged with stirring to precipitate a copolymer. The supernatant fluid was removed, and the precipitate was re-dissolved in AK225cb, and the solution was subjected to filtration through a membrane filter made of PTFE having a pore size of 1 μm to obtain a polymer solution. Then, the solvent of the obtained polymer solution was distilled off by means of an evaporator to obtain a fluoropolymer (X2)' (67 g) in the form of a colorless and transparent highly viscous liquid.

Then, by heating the fluoropolymer in a vacuum at 120°C for 2 hours, 65 g of a fluoropolymer (X2) was obtained. The mass average molecular weight of the fluoropolymer (X2) was measured by GPC, whereupon it was 7,600. Further, the fluoropolymer (X2) contained no polymerizable compound having a molecular weight of less than 1,000.

Further, the composition and the double bond content of the fluoropolymer (X2) were measured by $^{19}$F-NMR and as a result, the molar ratio of repeating units based on TFE, repeating units based on C4DVE and repeating units based on PPVE in the fluoropolymer (X2) was 61/12/27, and the double bond content was 0.6 mmol/g.

PREPARATION EXAMPLE 3: Preparation of fluoropolymer (X3)'

An autoclave made of stainless steel having an internal capacity of 1 L equipped with a stirrer was deaerated, and to this autoclave, TFE (17 g) as a fluoromonomer (a), C4DVE (79 g) as a fluorodiene (b), AK225cb (880 g), $SO_2Cl_2$ (10 g) as a chain transfer agent, and perfluorocyclohexane carbonyl peroxide (5 g) as a polymerization initiator were injected, and the interior of the autoclave was heated to 50°C with stirring, followed by polymerization reaction for 5 hours.

Then, the autoclave was cooled, and the content was taken out and put in a glass beaker having an internal capacity of 2 L. To this glass beaker, 500 g of methanol was charged with stirring to precipitate a copolymer. The supernatant fluid was removed, and the precipitate was re-dissolved in AK225cb, and the solution was subjected to filtration through a membrane filter made of PTFE having a pore size of 1 μm to obtain a polymer solution. Then, the solvent of the obtained polymer solution was distilled off by means of an evaporator to obtain 60 g of a fluoropolymer (X3)' in the form of a colorless and transparent highly viscous liquid.

The mass average molecular weight of the fluoropolymer (X3)' was measured by GPC, whereupon it was 3,500, and the fluoropolymer contained 3 mass% of a polymerizable compound having a molecular weight of less than 1,000. Further, the double bond content of the fluoropolymer (X3)' was measured by $^{19}$F-NMR and as a result, it was 0.9 mmol/g.

PREPARATION EXAMPLE 4: Preparation of fluoropolymer (X4)'

The same operation as in Preparation Example 3 was carried out to obtain 69 g of a fluoropolymer (X4)' except that an autoclave made of stainless steel having an internal capacity of 1 L equipped with a stirrer was deaerated, and to this autoclave, PPVE (120 g) and TFE (36 g) as fluoromonomers (a), C4DVE (40 g) as a fluorodiene (b), AK225cb (800 g), $SO_2Cl_2$ (5.0 g) as a chain transfer agent, and perfluorocyclohexane carbonyl peroxide (10 g) as a polymerization initiator were injected.

The mass average molecular weight of the fluoropolymer (X4)' was measured by GPC, whereupon it was 3,400, and the fluoropolymer contained 3 mass% of a polymerizable compound having a molecular weight of less than 1,000.

Further, the composition and the double bond content of the fluoropolymer (X4)' were measured by $^{19}$F-NMR and as a result, the molar ratio of the repeating units based on TFE, repeating units based on C4DVE and repeating

units based on PPVE in the fluoropolymer (X4)' was 58/11/32, and the double bond content was 0.5 mmol/g.

Now, Examples and Comparative Examples will be given below.

EXAMPLE 1

A curable composition comprising the fluoropolymer (X1) obtained in Preparation Example 1 alone was subjected to curing reaction in a glass sample bottle at 200°C for 2 hours, whereupon a colorless and transparent fluorinated cured product was obtained. The hardness of the obtained fluorinated cured product was measured by a durometer. Further, the mass (Ma) of the curable composition before curing and the mass (Mb) of the obtained fluorinated cured product were measured to calculate the mass reduction (%) from the following formula, thereby to confirm the volatile component amount (amount of volatilized low molecular weight components) at the time of the curing reaction.

$$\text{Mass reduction (\%)} = (1 - Mb/Ma) \times 100$$

EXAMPLE 2

A curable composition comprising the fluoropolymer (X2) obtained in Preparation Example 2 alone was subjected to curing reaction in a glass sample bottle at 200°C for 2 hours, whereupon a colorless and transparent fluorinated cured product was obtained. Of the obtained fluorinated cured product, the hardness and the mass reduction were measured in the same manner as in Example 1.

COMPARATIVE EXAMPLE 1

The fluoropolymer (X3)' (70 parts) obtained in Preparation Example 3, a polymerizable compound Z1 (30 parts) represented by the following formula (Z1) and $(C_6F_5C(CO)O)_2$ (0.2 part) as a curing agent were mixed in a glass sample bottle to prepare a syrupy curable composition having a viscosity (oscillational viscometer, 20°C) of 10 Pa·s. The curable composition was subjected to the curing reaction in a glass sample bottle at 60°C for 2 hours, at 70°C for 2 hours, at 90°C for 2 hours, at 120°C for 1 hour, at 150°C for 1 hour and at 180°C for 1 hour, whereupon a colorless and transparent fluorinated cured product was obtained. Of the obtained fluorinated cured product, the hardness and the mass reduction after heating at 200°C for 2 hours were measured in the same manner as in Example 1.

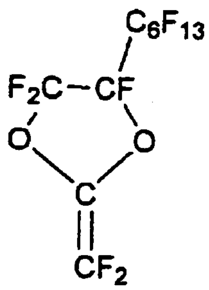

(Z1)

COMPARATIVE EXAMPLE 2

The fluoropolymer (X4)' (70 parts) obtained in Preparation Example 4, the polymerizable compound Z1 (30 parts) of the above formula, and $(C_6F_5C(CO)O)_2$ (0.2 part) as a curing agent were mixed in a glass sample bottle to prepare a syrupy curable composition having a viscosity (oscillational viscometer, 20°C) of 6 Pa·s. The curable composition was subjected to curing reaction in a glass sample bottle at 60°C for 2 hours, at 70°C for 2 hours, at 90°C for 2 hours, at 120°C for 1 hour, at 150°C for 1 hour and at 180°C for 1 hour, whereupon a colorless and transparent fluorinated cured product was obtained. Of the obtained fluorinated cured product, the hardness and the mass reduction were measured in the same manner as in Example 1.

With respect to the fluorinated cured products obtained in Examples 1 and 2 and Comparative Examples 1 and 2, measurement results of the hardness and the mass reduction, and the time required for the curing reaction, are

shown in Table 1. With respect to the representation of hardness, D is harder than A, and the higher the value, the harder.

TABLE 1

| | | Ex.1 | Ex. 2 | Comp. Ex. 1 | Comp. Ex. 2 |
|---|---|---|---|---|---|
| Curing reaction time (total) (h) | | 2 | 2 | 9 | 9 |
| Fluorinated cured product | Hardness | D50 | A30 | D60 | A70 |
| | Mass reduction (%) | 0.5 | 0.7 | 5.0 | 4.0 |

As shown in Table 1, in Examples 1 and 2 in which the curable composition of the present invention was used, the curing time was 2 hours, and the curing rate was very high. Further, the mass reduction was small, and the volatilization of low molecular weight components at the time of the curing reaction was suppressed. Further, the obtained fluorinated cured product had a hardness at the same level as Comparative Examples in which a conventional method was employed.
On the other hand, in Comparative Example 1, to suppress volatilization by the polymerizable compound Z1 having volatility and low molecular weight components having a molecular weight of less than 1,000 contained in the fluoropolymer (X3)', it was required to set a reaction temperature particularly at the initial stage of the curing reaction low. Further, under the conditions, the mass reduction was great as compared with Example 1 in which the same (one type) fluoromonomer (a) component was used, and volatilization of low molecular weight components was great at the time of the curing reaction. Further, for the curing reaction, a polymerization initiator was required since the reaction temperature was low, and the curing rate was low.
Further, in Comparative Example 2, in the same manner as in Comparative Example 1, the mass reduction was great as compared with Example 2 in which the same (two types) fluoromonomer (a) components were used, and the volatilization of low molecular weight components was great at the time of the curing reaction. Further, for the curing reaction, a polymerization initiator was required since the reaction temperature was low, and the curing rate was low.

EXAMPLE 3

Using the fluoropolymer (X2) obtained in Preparation Example 2, an LED device was encapsulated.
Specifically, into a concave portion of a cup-form LED device having GaN type LED (emission wavelength: 460 nm) wire-bonded, the fluoropolymer (X2) was injected, and heating was carried out at 100°C for 30 minutes to remove bubbles (air) so that the concave portion was tightly filled with the fluoropolymer. Then, heating was carried out at 150°C for 30 minutes and at 200°C for 2 hours to carry out the curing reaction, whereby the LED device was encapsulated.
An electric current at 3.5 V and 350 mA was applied to the LED device, whereupon the electric current was not changed even after 2 weeks, and the transparency was maintained.

EXAMPLE 4

A curable composition comprising the fluoropolymer (X2) obtained in Preparation Example 2 alone was cast on a glass plate and irradiated with ultraviolet rays (including wavelength of 254 nm) for 20 minutes from a distance of 10 cm by using a 1 kW high-pressure mercury lamp (unit length output: 80 W/cm) manufactured by SEN LIGHTS CORPORATION in a nitrogen atmosphere, whereupon a colorless and transparent fluorinated cured product was obtained.
The obtained fluorinated cured product was separated from the glass plate, and its durometer hardness was measured, whereupon it was A60, and it was confirmed that the crosslinking density was increased as compared with the cured product obtained by heat curing in Example 1, and that the hardness was increased. Further, the mass reduction at the time of curing was at most 0.4%.
Further, in a state where 0.1 g of the obtained fluorinated cured product was put in 0.4 g of perfluorobenzene so that the cured product swelled, $^{19}$F-NMR was measured with an integrated number of 256.
Absence of a cyclobutane ring formed by coupling of $-CF=CF_2$ groups in the side chains of the fluoropolymer (X) was confirmed. On the other hand, $^{19}$F-NMR was measured with respect to the fluorinated cured product in Example 1 in the same manner, whereupon presence of signals of $CF_2O$ derived from a cyclobutane ring was confirmed, and accordingly it was suggested that the reaction mechanism is different between heat curing and ultraviolet curing.

INDUSTRIAL APPLICABILITY

The curable composition of the present invention is useful as an optical material, particularly a material for a lens, a sealing material for a device (particularly a light-emitting device (short wavelength light-emitting device such as white LED), an organic EL device sealing material, an inorganic EL phosphor dispersing material, a solar cell sealing material) or a material for an optical waveguide. Further, as it can be used with various fillers added, it is useful also as a heat resistance and chemical resistant sealing material, adhesive or coating material. Since it has high insulating properties and low refractive index, it may be used as a circuit board after a glass cloth is impregnated with the curable composition, followed by curing.
In a case of utilizing UV curing properties, since curing is possible at room temperature, it may be used as a side sealing material for a cell such as LCD or a dye-sensitized solar cell, a material for patterning, or an antireflection coating for e.g. a flexible display.
Further, it is also useful as a crosslinked polymer component of a fluorinated ion exchange membrane used for salt electrolysis or as a fuel cell material.
The entire disclosures of Japanese Patent Application No. 2008-016631 filed on January 28, 2008 and Japanese Patent Application No. 2008-239342 filed on September 18, 2008 including specifications, claims and summaries are incorporated herein by reference in their entireties.

## Claims

1. A curable composition comprising a polymerizable compound having a polymerizable double bond, wherein the mass ratio of a polymerizable compound (P) having a molecular weight of at least 1,000 is at least 90 mass% to all polymerizable compounds in the curable composition, and the polymerizable compound (P) contains the following fluoropolymer (X):

    fluoropolymer (X): a copolymer having a molecular weight of at least 1,000 among fluoropolymers (X)' which are copolymers having repeating units derived from at least one fluoromonomer (a) selected from the group consisting of a fluoromonoene and a cyclic polymerizable fluorodiene, and repeating units derived from a fluorodiene (b) having an unsaturated side chain remaining.

2. The curable composition according to Claim 1, wherein the mass average molecular weight of the fluoropolymer (X) is from 3,000 to 20,000.

3. The curable composition according to Claim 1 or 2, wherein the fluoromonomer (a) is a perfluoromonomer, and the fluorodiene (b) is a perfluorodiene.

4. The curable composition according to any one of Claims 1 to 3, wherein the fluoromonomer (a) is tetrafluoroethylene.

5. The curable composition according to any one of Claims 1 to 4, wherein the fluorodiene (b) is a compound represented by $CF_2=CFO-Q^{F1}-OCF=CF_2$ (wherein $Q^{F1}$ is a bivalent perfluoroalkylene group which may have a side chain of a perfluoroalkyl group, which has from 3 to 8 carbon atoms, and which may have an etheric oxygen atom between carbon atoms).

6. A process for producing the curable composition as defined in any one of Claims 1 to 5, which comprises a step of preliminarily charging part of the fluoromonomer (a) and the fluorodiene (b) to be used for preparation of the fluoropolymers (X)' among the entire amount to be used, to a reactor to initiate the polymerization reaction, and successively adding the rest of the fluoromonomer (a) and the fluorodiene (b) during the progress of the polymerization reaction to conduct polymerization thereby to produce the fluoropolymers (X)'.

7. A process for producing a fluorinated cured product, which comprises a step of curing the curable composition as defined in any one of Claims 1 to 5 at from 100 to 250°C.

8. A process for producing a fluorinated cured product, which comprises a step of curing the curable composition as defined in any one of Claims 1 to 5 with ultraviolet rays having a wavelength of from 150 to 400 nm.

9. A fluorinated cured product, which is obtained by curing the curable composition as defined in any one of Claims 1 to 5.

**10.** An optical material, which comprises the fluorinated cured product as defined in Claim 9.

**11.** A light-emitting device, which is encapsulated in a light-transmitting manner with the fluorinated cured product as defined in Claim 9.

## INTERNATIONAL SEARCH REPORT

International application No.
PCT/JP2009/051124

A. CLASSIFICATION OF SUBJECT MATTER
*C08F214/18*(2006.01)i, *H01L33/00*(2006.01)i

According to International Patent Classification (IPC) or to both national classification and IPC

B. FIELDS SEARCHED

Minimum documentation searched (classification system followed by classification symbols)
C08F214/18, H01L33/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| A | JP 06-248026 A (Asahi Glass Co., Ltd.), 06 September, 1994 (06.09.94), Full text (Family: none) | 1-11 |
| A | WO 2007/145181 A1 (Asahi Glass Co., Ltd.), 21 December, 2007 (21.12.07), Full text (Family: none) | 1-11 |
| A | WO 2005/085303 A1 (Asahi Glass Co., Ltd.), 15 September, 2005 (15.09.05), Full text & US 2006/0281883 A1 & EP 1724291 A1 | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 April, 2009 (14.04.09) | 28 April, 2009 (28.04.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No. PCT/JP2009/051124

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-008073 A (Matsushita Electric Works, Ltd.), 10 January, 2003 (10.01.03), Full text (Family: none) | 1-11 |
| A | WO 2005/037818 A1 (Asahi Glass Co., Ltd.), 28 April, 2005 (28.04.05), Full text & US 2006/0183875 A1 & EP 1674461 A1 | 1-11 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2084456 A
- JP 2129254 A
- JP 2003008073 A
- WO 07145181 A
- WO 2005085303 A
- JP 2008016631 A
- JP 2008239342 A


### Non-patent literature cited in the description


- *J. Fluorine Chemistry,* 1987, vol. 36, 449